# EUROPÄISCHE PATENTSCHRIFT

(11) **EP 1 418 108 B1**
(45) Veröffentlichungstag und Bekanntmachung des Hinweises auf die Patenterteilung: **07.11.2007**
(21) Anmeldenummer: 03025599.6
(22) Anmeldetag: 07.11.2003
(51) Int. Cl.: B61C 15/10, B60B 39/08

(54) **Druckluftbetriebene Sandstreuvorrichtung, und Verfahren dazu**
Pneumatic sanding device, and corresponding method
Dispositif de sablage pneumatique, et procédé correspondant

(30) Priorität: 10.11.2002 DE 10252466
(43) Veröffentlichungstag der Anmeldung: 12.05.2004
(73) Patentinhaber: IBEG systems GmbH, 45770 Marl (DE)
(72) Erfinder: Pietrowski, Peter, 45770 Marl (DE)
(74) Vertreter: Kreutzer, Ulrich

(56) Entgegenhaltungen:
- EP-A- 1 182 109
- DE-A- 2 146 540
- DE-A- 4 238 049
- DE-C- 75 525
- US-A- 2 568 972

## Beschreibung

Die Erfindung betrifft eine druckluftbetriebene Sandstreuvorrichtung mit einem Sandbehälter und einer Druckluftquelle und ein Verfahren zum Streuen von Sand.

Solche Vorrichtungen und Verfahren sind bekannt. Sie dienen zum bedarfsweisen Ausbringen von Sand insbesondere bei Schienenfahrzeugen und Bussen zur Erhöhung der Haftung der Räder auf glattem Untergrund zwecks Verbesserung der Bremswirkung.

Dabei sei an dieser Stelle betont, daß die entsprechenden Vorrichtungen aufgrund der Tatsache, daß im Regelfall Sand gestreut wird, gemeinhin als Sandstreuvorrichtungen bezeichnet werden, daß aber mit den Vorrichtungen natürlich auch beliebige andere zur Erzielung der gewünschten Wirkung geeignete Streugüter gestreut werden können. Wenn also in dieser Anmeldung dem üblichen Sprachgebrauch gefolgt und stets nur von Sand bzw. von Sandstreuvorrichtung gesprochen wird, so ist hierin keine Beschränkung auf Sand als Streugut zu sehen.

Eine druckluftbetriebene Sandstreuvorrichtung ist bekannt aus der DE 100 44 608 A1. Dabei fällt der Sand aus einem Sandbehälter unter Schwerkrafteinfluß in einen sogenannten Sandauslauf, in welchem nach Art eines Abflußsiphons ein Kanal mit zwei Biegungen ausgebildet ist. Der Sand sammelt sich in der ersten Biegung vor einer mit einer Druckluftquelle verbundenen Luftdüse, die dann bei Betätigung den Sand aus der ersten Biegung über die zweite Biegung hinüberdrückt, von wo aus er in ein Fallrohr gelangt. Eine vergleichbare Anordnung ist auch aus der DE 42 38 049 A1 bekannt.

Wenngleich sich die aus den beiden Druckschriften bekannten Sandstreuvorrichtungen in der Praxis überaus bewährt haben, besteht doch der Wunsch, das Streugut, also im Regelfall den Sand, noch exakter dosieren zu können. Bei den bekannten Vorrichtungen, bei denen im Leerlauf eine gewisse Menge Sand vor der Luftdüse liegt, muß nämlich zunächst eine relativ große Kraft aufgewendet werden, damit sich der Sand "in Bewegung setzt" und in das Fallrohr gelangt. Dies führt dazu, daß zumindest beim Anlaufen der Vorrichtungen häufig mehr Sand als eigentlich benötigt ausgestoßen wird.

Aus DE 44 29 370 A1 ist eine Sandstreuvorrichtung bekannt, bei welcher Sand von einem Sandbehälter unter Schwerkrafteinfluß nach Öffnen eines gesonderten Ventils in einen Mischer fällt, in welchem er mit einem über ein separates Ventil steuerbaren Druckluftstrom in nicht näher bezeichneter Weise zusammengeführt wird. Dabei ist die entsprechende Vorrichtung relativ träge, da Sand aus dem Sandbehälter zunächst nur bis zu einem Ventil gelangen kann, welches erst geöffnet werden muß, um dann einen Sandstrom zu dem Mischer zu ermöglichen, in welchem der Sand dann mit Druckluft beschleunigt und an den Einsatzort geblasen wird. Zudem hat sich gezeigt, daß die Dosierung von Sand aufgrund der unterschiedlichen Körnung mittels Ventilen nicht unproblematisch ist und der Sand insbesondere bei widrigen Witterungsbedingungen die Ventile leicht zusetzt.

Ferner beschreibt die EP 1 182 109 A1 eine Sandstreuvorrichtung, bei der der Sand über eine Ansaugöffnung in eine Mischkammer angesaugt wird und weiter in einen Ausstoßkanal transportiert wird. Überschüssige für einen Sandansaugvorgang nicht benötigte Druckluft wird dabei in den Sandbehälter geleitet und später dem Ausstoßkanal über einen Entladekanal wieder zugeführt. Der Entladekanal soll hierbei einen Druckanstieg im Behälter vermeiden bzw. einen schnellen Druckausgleich mit der Umgebung unmittelbar nach Beendigung des Streuvorgangs gewährleisten. Allerdings kann es dabei zu Wechselwirkungen zwischen der Mischkammer und der Entladungskanal kommen, was den Vorgang einer sehr feinen Dosierung stört. Zudem ist das im Behälter angeordnete Regelventil nicht von außen einstellbar, so daß lediglich eine Voreinstellung außerhalb des eigentlichen Streubetriebes möglich ist.

Die DE 403 433 zeigt einen Druckluftsandstreuer auf, der konstruktive Maßnahmen aufweist, durch die der Sand dazu gezwungen wird, fortdauernd in kleinen Mengen in ein Führungsrohr zu fallen, und dort gleichmäßig abgesaugt wird. Allerdings sind keine Mittel vorgesehen, welche die Menge der verwendeten Druckluft beeinflussen könnten. Die Menge des zu streuenden Sandes ist somit nicht dosierbar.

Davon ausgehend liegt der Erfindung die Aufgabe zugrunde, eine Sandstreuvorrichtung und ein Verfahren zum Streuen von Sand anzugeben, die eine bei Bedarf sehr schnelle Ausbringung von Sand ermöglichen, die ohne spezielle Sandventile auskommen und bei denen zudem die Sandmenge sehr fein dosierbar ist.

Die Aufgabe wird von der druckluftbetriebene Sandstreuvorrichtung gemäß Anspruch 1 gelöst.

Vorteilhafte Ausgestaltungen und Weiterbildungen sind Gegenstand der entsprechenden Unteransprüche.

In verfahrensmäßiger Hinsicht wird die Aufgabe von dem Verfahren zum Streuen von Sand gemäß Anspruch 7 gelöst.

Weitere Einzelheiten und Vorteile der Erfindung ergeben sich aus der nachfolgenden rein beispielhaften und nicht-beschränkenden Beschreibung zweier Ausführungsbeispiele in Verbindung mit der Zeichnung. Es zeigen:
- Fig. 1: eine schematische, teilweise geschnittene Prinzipskizze eines ersten Ausführungsbeispiels einer erfindungsgemäßen Sandstreuvorrichtung mit einem Sandauslauf und einer Düse, wobei Sandauslauf und Düse entlang der Mittelachse der Düse geschnitten sind und
- Fig. 2: eine schematische Prinzipskizze eines zweiten Ausführungsbeispiels, wobei Sandauslauf und Düse senkrecht zur Mittelachse der Düse geschnitten sind.

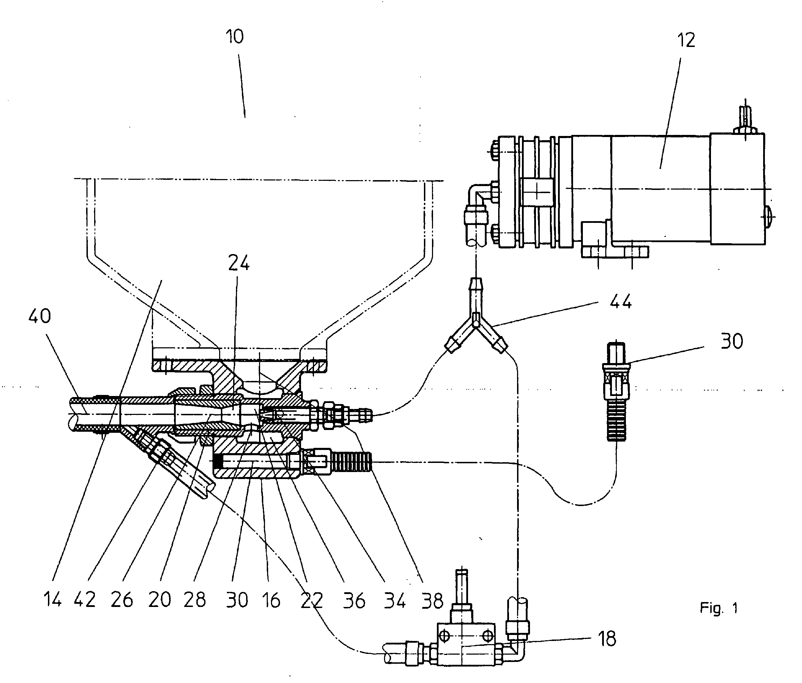

In der **Fig. 1** ist der prinzipielle Aufbau einer erfindungsgemäßen, in ihrer Gesamtheit mit 10 bezeichneten Sandstreuvorrichtung gezeigt, wobei die Sandstreuvorrichtung unter anderem eine Druckluftquelle, hier in Form eines Kompressors 12, einen Sandbehälter 14, einen Sandauslauf 16 und ein Drosselventil 18 umfaßt.

Der Sandbehälter 14 ist vorteilhaft trichterförmig ausgebildet und mündet in dem sogenannten Sandauslauf 16. Im Sandauslauf ist bei diesem Ausführungsbeispiel eine in ihrer Gesamtheit mit 20 bezeichnete Düse angeordnet, die im wesentlichen drei Abschnitte, nämlich einen kreiszylindrischen Abschnitt 22, einen konvergenten Abschnitt 24 und einen divergenten Abschnitt aufweist. Dabei bildet der divergente Abschnitt einen Ausstoßkanal 26 für den zu streuenden Sand.

In dem kreiszylindrischen Abschnitt 22 der Düse 20 sind eine Sandansaugöffnung 28 und ein Lufteinlaß vorgesehen.

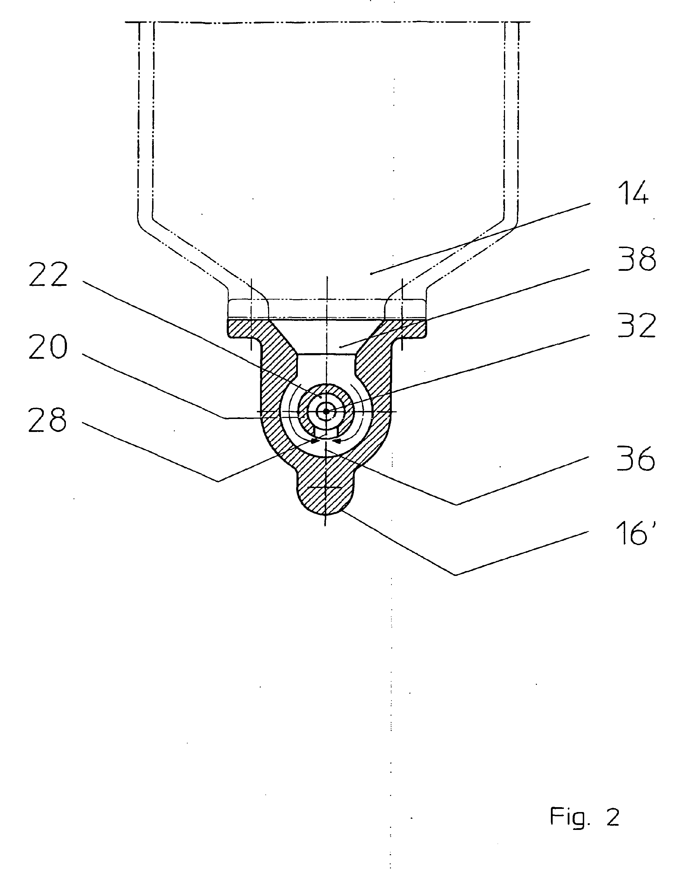

Das in der **Fig. 2** gezeigte Ausführungsbeispiel unterscheidet sich von dem in Fig. 1 gezeigten Ausführungsbeispiel nur dadurch, daß der Sandauslauf 16' anders als der Sandauslauf 16 gemäß Fig. 1 nicht über Heizmittel 30 verfügt, die in unterschiedlicher Weise ausgebildet sein können und zur Verhinderung des Festfrierens von Sand im Sandauslauf bei extremen Witterungsbedingungen dienen. Da aber ansonsten zwischen dem in Fig. 1 und dem in Fig. 2 gezeigten Sandauslauf 16 bzw. 16' und insbesondere den Düsen 20 keine Unterschiede bestehen, wurden gleichwirkende Teile mit denselben Bezugszeichen versehen, und die beiden Ausführungsbeispiele werden nachfolgend gemeinsam beschrieben.

In dem im zylindrischen Abschnitt 22 der Düse 20 vorgesehenen Lufteinlaß 32 mündet eine hier nur angedeutete Luftzuführungsleitung, über welche Druckluft aus einer Druckluftquelle, insbesondere also einem Kompressor 12, der Düse 20 zugeführt werden kann.

Vorteilhaft kann am Ende der Druckluftleitung ein düsenartiger Abschnitt 34 vorgesehen sein, so daß die Druckluft bereits beim Eintritt in die Düse 20 beschleunigt wird.

Im Sandauslauf 16 bzw. 16' ist eine bei den gezeigten Ausführungsbeispielen im wesentlichen kreiszylindrische Kammer, hier Sandansaugraum 36 genannt, gebildet, die an ihrer Oberseite in einen trichterförmigen Sandeinlaß 38 übergeht.

Die Düse 20 ist mit dem Sandansaugraum 36 über die Sandansaugöffnung 28 direkt, das heißt ohne Zwischenschaltung irgendwelcher Leitungen, verbunden. Im bestimmungsgemäßen Betriebszustand kann dann Sand aus dem Sandbehälter 14 über den Sandeinlaß 38 in den Sandansaugraum 36 gelangen, von wo aus er über die Sandansaugöffnung 28 in die Düse 20 eingesaugt wird.

Bei den gezeigten Ausführungsbeispielen ist die Düse 20 vorteilhaft so im Sandauslauf 16 angeordnet, daß die Mittelachse ihres zylindrischen Abschnittes 22 mit der Mittelachse des hier im wesentlichen kreiszylindrischen ausgebildeten Ansaugraumes 36 zusammenfällt. Durch den Sandeinlaß 38 eintretender Sand umströmt dann den in dem Ansaugraum 36 befindlichen Abschnitt der Düse 20 beidseitig, wie in Fig. 2 durch die beiden Bewegungspfeile angedeutet. Man beachte, daß im gesamten Weg des Sandes von dem Sandbehälter 14 zum Boden des Sandansaugraumes 36 keine Absätze, Vorsprünge, Kanten und dergleichen ausgebildet sind, an denen sich Sand sammeln könnte. Der Sand gelangt also vorteilhaft bereits durch Schwerkrafteinfluß zum Boden des Sandansaugraumes, von wo aus er bei Bedarf in die Düse eingesaugt werden kann, so daß das gesamte Füllvolumen des Sandbehälters 14 tatsächlich zum Einsatz kommen kann.

Wie sowohl in Fig. 1 als auch Fig. 2 gut zu erkennen, ist die Sandansaugöffnung 28 so angeordnet, daß sie sich über dem Boden des Sandansaugraumes 36, genauer gesagt über der im bestimmungsgemäßen Betriebszustand tiefsten Stelle des Bodens befindet, gleichzeitig aber von der Außenwand der Düse 20 gegen von oben in den Sandansaugraum 36 fallenden Sand abgeschirmt ist. Diese erfindungsgemäße Anordnung bewirkt, daß kein Sand in die Düse 20 fallen kann. Vielmehr muß der Sand aktiv in die Düse eingesaugt werden, wodurch die ausgebrachte Sandmenge sehr genau zu dosieren ist und der bei Fahrzeugen regelmäßig nur in begrenzter Menge zur Verfügung stehende Sand optimal ausgenutzt werden kann.

Der Düse 20 ist eine Sandleitung 40 nachgeordnet, die in an sich bekannter Weise zu derjenigen Stelle führt, an der der Sand austreten soll.

In der Sandleitung 40 mündet eine Luftzufuhr 42, über welche Druckluft in die Sandleitung 40 geblasen werden kann, die den bereits von Düse 20 beschleunigten Sand weiter beschleunigen kann. Die Luftzufuhr 42 kann eine düsenartige Mündung nach Art der des düsenartigen Abschnittes 34 aufweisen.

Eine Besonderheit der gezeigten Ausführungsbeispiele liegt in der Tatsache, daß die Luftzufuhr 42 und die Düse 20 an ein und dieselbe Druckluftquelle, hier den Kompressor 12, angeschlossen sind, und zwar bei diesen Ausführungsbeispielen unter Verwendung eines Y-Stücks 44.

Das Verhältnis der der Düse 20 und der der Luftzufuhr 42 zugeführten Druckluftmenge wird bei dem mit Fig. 1 gezeigten Ausführungsbeispiel über ein Drosselventil 18 eingestellt, wobei das Ventil 18 rein beispielhaft im Luftweg zwischen Y-Stück 44 und Luftzufuhr 42 angeordnet ist. Je nach den baulichen Gegebenheiten am Einsatzort der Sandstreuvorrichtung kann das Drosselventil jedoch genausogut auch in den Luftweg zwischen Y-Stück 44 und Düse 20 eingebracht werden.

Die Luftzufuhr 42 bildet zusammen mit dem Drosselventil 18 und dem Y-Stück 44 einen genau einstellbaren Bypass für den Luftweg durch die Düse, was eine ganze Reihe von Vorteilen hat. Insbesondere kann über das Drosselventil 18 die ausgeblasene Sandmenge sehr genau dosiert werden, ohne daß in den Sandweg, also den Weg, den der Sand vom Sandbehälter 14 zu der Stelle, an der er die Sandstreuvorrichtung verläßt, nimmt, irgendwelche aufwendigen und in der Regel wartungsanfälligen Sandventile eingebracht werden müssen. Auch braucht die Menge der der Druckluftquelle entnommenen bzw. (wenn es sich bei der Druckluftquelle um einen Kompressor handelt) erzeugten Druckluft nicht verändert zu werden. Vielmehr wird lediglich das Verhältnis der der Düse 20 zu der direkt in die Sandleitung 40 eingespeisten Druckluftmenge verändert. Die nicht in die Düse 20 eingeleitete Druckluft ist nicht verloren, sondern dient zur weiteren Beschleunigung austretenden Sandes.

Dabei hat sich überraschenderweise gezeigt, daß die ausgestreute Sandmenge durch die Steuerung der der Düse 20 zugeführten Druckluftmenge, die ein Einsaugen von Sand aus dem Ansaugraum über den Sandeinlaß in die Düse bewirkt, wesentlich genauer dosiert werden kann als dies mit Sandventilen oder Druckluftstößen, die den an einer Stelle angesammelten Sand vor sich her blasen, möglich ist.

Im Rahmen der in den Ansprüchen definierten Erfindung sind zahlreiche Abwandlungen und Weiterbildungen möglich, die sich z. B. auf die Ausbildung der einzelnen Düsenabschnitte, die Form der Sandansaugöffnung und die Ausbildung des Sandansaugraumes beziehen.

So ist es z. B. möglich, anstelle einer Sandansaugöffnung mit im wesentlichen rundem Querschnitt eine Sandansaugöffnung in Form eines länglichen Schlitzes und/oder auch mehrere Sandansaugöffnungen vorzusehen, die ebenfalls von dem Düsenkörper oder einem speziell ausgebildeten Schirm vor im bestimmungsgemäßen Montagezustand der Sandstreuvorrichtung unter Schwerkrafteinfluß nach unten fallenden Sand geschützt sind, so daß auch dabei dann kein Sand von sich aus in die Düse fallen kann. Ferner muß die Düse nicht in einem Sandauslauf angeordnet sein, sondern kann sich vielmehr neben oder über dem eigentlichen Sandauslauf befinden, wenn sichergestellt ist, daß der Ansaugweg nicht zu lang wird und daß Sand in ausreichender Menge in den Sandauslauf gelangen kann. Selbstverständlich können Sandauslauf und Düse bzw. Sandauslauf und Sandbehälter auch einstückig ausgebildet sein, wenngleich sich die dargestellte und beschriebene modulare, das heißt aus jeweils gesonderten Bauteilen zusammengesetzte Bauweise bewährt hat.

## Patentansprüche

1. Druckluftbetriebene Sandstreuvorrichtung (10)
umfassend
- einen Sandbehälter (14),
- eine Druckluftquelle (12),
- einen mit dem Sandbehälter verbundenen Sandansaugraum (36) und
- eine mit der Druckluftquelle verbundene Düse (20),
wobei
- die Düse über einen Lufteinlaß, einen Ausstoßkanal (26) und eine Sandansaugöffnung (28) verfügt,
- der Sandansaugraum mit der Düse über die Sandansaugöffnung direkt oder indirekt verbunden ist
- der Düse (20) in Strömungsrichtung eine Sandleitung (40) nachgeordnet ist,
- in der Sandleitung (40) eine Luftzufuhr (42) mündet,
- die Luftzufuhr (42) und die Düse (20) mit derselben Druckluftquelle (12) verbunden sind und
- Mittel (18) zum Einstellen des Verhältnisses der aus der Druckluftquelle zur Düse (20) und der zur Luftzufuhr (42) geleiteten Menge an Druckluft vorgesehen sind,
**dadurch gekennzeichnet, daß**
- die Düse (20) in Strömungsrichtung gesehen einen der Sandansaugöffnung (28) nachgeordneten konvergenten Abschnitt (24) besitzt.

2. Sandstreuvorrichtung (10) nach Anspruch 1,
**dadurch gekennzeichnet, daß**
- die Düse (20) und der Sandansaugraum (36) in einem dem Sandbehälter nachgeordneten Sandauslauf (16) angeordnet sind.

3. Sandstreuvorrichtung (10) nach Anspruch 2,
**dadurch gekennzeichnet, daß**
- der Sandansaugraum (36) in dem Sandauslauf (16) ausgebildet ist und vorzugsweise eine im wesentlichen kreiszylindrische Form mit einer Mittelachse besitzt.

4. Sandstreuvorrichtung (10) nach Anspruch 3,
**dadurch gekennzeichnet, daß**
- die Düse (20) einen kreiszylindrischen Abschnitt (22) mit einer Mittelachse besitzt und derart in dem Sandansaugraum (36) angeordnet ist, daß die Mittelachse der Düse zu der Mittelachse des Sandansaugraumes parallel verläuft, vorzugsweise mit der Mittelachse des Sandansaugraumes zusammenfällt.

5. Sandstreuvorrichtung (10) nach einem der Ansprüche 1 bis 4,
**dadurch gekennzeichnet, daß**
- die Düse (20) derart in dem Sandansaugraum (36) angeordnet ist, daß sich die Sandansaugöffnung (28) im bestimmungsgemäßem Betriebszustand über dem tiefsten Punkt des Sandansaugraumes befindet.

6. Sandstreuvorrichtung (10) nach einem der Ansprüche 1 bis 5,
**dadurch gekennzeichnet, daß**
- der Ausstoßkanal (26) der Düse (20) in Strömungsrichtung gesehen divergent ausgebildet ist.

7. Verfahren zum Streuen von Sand,
- wobei der Sand in einen Sandansaugraum (36) geleitet wird,
- wobei die Druckluft derart durch eine mit einem Lufteinlaß und einem Ausstoßkanal (26) versehene und mit dem Sandansaugraum über eine Sandansaugöffnung (28) verbundene Düse (20) geblasen wird daß der Sand aus dem Sandansaugraum über den Sandeinlaß (38) in die Düse (20) eingesaugt und aus der Düse über den Ausstoßkanal ausgestoßen wird, und
- wobei der Sand von dem Ausstoßkanal in eine Sandleitung (40) gelangt,
**dadurch gekennzeichnet, daß**
- einer Druckluftquelle (12) Druckluft entnommen und auf die Düse (20) unter Einsaugung von Sand in die Düse und auf eine in der Sandleitung (40) mündende Luftzufuhr verteilt wird,
- die Düse (20) in Strömungsrichtung gesehen einen der Sandansaugöffnung (28) nachgeordneten konvergenten Abschnitt (24) besitzt,
- wobei die Luftzufuhr und die Düse mit derselben Druckluftquelle verbunden sind und
- wobei das Verhältnis zwischen der der Düse und der der Luftzufuhr zugeführten Menge an Druckluft zur Steuerung der ausgestreuten Menge an Sand eingestellt wird.

## Claims

1. An air-operated sand spreading device (10),
comprising
- a sand reservoir (14),
- a compressed-air source (12),
- a sand suction compartment (36) communicating with the sand reservoir and
- a nozzle (20) communicating with the compressed-air source,
wherein
- the nozzle has an air inlet, an expulsion channel (26), and a sand suction aperture (28),
- the sand suction compartment is connected directly or indirectly to the nozzle via the sand suction compartment,
- the nozzle (20) is followed by a sand pipe (40) in the direction of flow,
- an air supply (42) opens into the sand pipe (40),
- the air supply (42) and the nozzle (20) communicate with the same compressed-air source (12), and
- means (18) are provided for adjusting the ratio of the compressed air volume passed to the nozzle (20) from the compressed-air source and the volume of compressed air directed to the air supply (42),
**characterized in that**
- the nozzle (20), as viewed in the direction of flow, has a convergent portion (24) following after the sand suction aperture (28).

2. The sand spreading device (10) according to claim 1.
**characterized in that**
- the nozzle (20) and the sand suction compartment (36) are disposed in a sand outlet (16) following after the sand reservoir.

3. The sand spreading device (10) according to claim 2,
**characterized in that**
- the sand suction compartment (36) is formed within the sand outlet (16) and preferably has a shape which substantially is circularly cylindrical, with a centre axis.

4. The sand spreading device (10) according to claim 3,
**characterized in that**
- the nozzle (20) has a circularly cylindrical portion (22) with a centre axis and is disposed within the sand suction compartment (36) such that the centre axis of the nozzle extends in parallel with the centre axis of the sand suction compartment, preferably coincides with the centre axis of the sand suction compartment.

5. The sand spreading device (10) according to any one of claims 1 to 4,
**characterized in that**
- the nozzle (20) is disposed within the sand suction compartment (36) such that the sand suction aperture (28), when in a due operating condition, is located above the lowest point of the sand suction compartment.

6. The sand spreading device (10) according to any one of claims 1 to 5,
**characterized in that**
- the expulsion channel (26) of the nozzle (20) is of a divergent configuration, as viewed in a direction of flow.

7. A method for spreading sand,
- wherein the sand is directed to a sand suction compartment (36),
- wherein the compressed air is blown through a nozzle (20) provided with an air inlet and an expulsion channel (26) and communicating with the sand suction compartment via a sand suction aperture (28) in such a way that the sand is drawn into the nozzle from the sand suction compartment through the sand inlet (38) and is expelled from the nozzle via the expulsion channel, and
- wherein the sand gets into a sand pipe (40) from the expulsion channel,
**characterized in that**
- air is withdrawn from a compressed-air source (12) and is distributed to the nozzle (20) while sand is being drawn into the nozzle, and to an air supply opening into the sand conduit (40),
- the nozzle (20), as viewed in a direction of flow, has a convergent portion (24) which follows after the sand suction aperture (28),
- the air supply and the nozzle communicate with the same compressed-air source, and
- wherein the ratio between the volumes of compressed air supplied to the nozzle and to the air supply is adjusted for a control of the volume of sand which is spread out.

## Revendications

1. Dispositif pneumatique de sablage (10)
comprenant
- un réservoir à sable (14),
- une source à air comprimé (12),
- un espace d'aspiration de sable (36) relié au réservoir à sable et
- une tuyère (20) reliée à ladite source à air comprimé,
- ladite tuyère disposant d'une entrée d'air, d'un canal d'éjection (26) et d'une ouverture d'aspiration de sable (28),
- ledit espace d'aspiration de sable étant relié directement ou indirectement à la tuyère par l'intermédiaire de l'ouverture d'aspiration de sable,
- une conduite de sable (40) étant disposée en aval de la tuyère (20) dans le sens d'écoulement,
- une admission d'air (42) débouchant dans ladite conduite de sable (40),
- ladite admission d'air (42) et ladite tuyère (20) étant reliées à la même source à air comprimé (12), et
- des moyens (18) étant prévus destinés à régler le rapport de la quantité d'air comprimé transportée depuis la source à air comprimé vers la tuyère (20) et de celle acheminée vers l'admission d'air (42),
**caractérisé par le fait que**
- ladite tuyère (20) présente - vue dans le sens d'écoulement - une section convergente (24) placée en aval de l'ouverture d'aspiration de sable (28).

2. Dispositif de sablage (10) selon la revendication 1,
**caractérise par le fait que**
- ladite tuyère (20) et l'espace d'aspiration de sable (36) sont disposés dans une sortie de sable (16) placé en aval dudit réservoir à sable.

3. Dispositif de sablage (10) selon la revendication 2,
**caractérise par le fait que**
- l'espace d'aspiration de sable (36) est réalisé dans ladite sortie de sable (16) et présente de préférence une forme sensiblement cylindrique circulaire avec un axe médian.

4. Dispositif de sablage (10) selon la revendication 3,
**caractérise par le fait que**
- ladite tuyère (20) présente une section cylindrique circulaire (22) avec un axe médian et est disposée dans l'espace d'aspiration de sable (36) de telle sorte que l'axe médian de la tuyère s'étend parallèlement à l'axe médian de l'espace d'aspiration de sable, de préférence coïncide avec l'axe médian de l'espace d'aspiration de sable.

5. Dispositif de sablage (10) selon l'une des revendications 1 à 4,
**caractérise par le fait que**
- ladite tuyère (20) est disposée dans l'espace d'aspiration de sable (36) de telle manière que, à l'état de fonctionnement conforme, l'ouverture d'aspiration de sable (28) est située sur le point le plus bas de l'espace d'aspiration de sable.

6. Dispositif de sablage (10) selon l'une des revendications 1 à 5,
**caractérise par le fait que**,
- vu dans la direction d'écoulement, le canal d'éjection (26) de la tuyère (20) est réalisé de manière divergente.

7. Procédé de sablage,
- le sable étant acheminé dans un espace d'aspiration de sable (36),
- l'air comprimé étant soufflé à travers une tuyère (20) pourvue d'une entrée d'air et d'un canal d'éjection (26) et reliée à l'espace d'aspiration de sable par l'intermédiaire d'une ouverture d'aspiration de sable (28), de telle manière que le sable est aspiré de l'espace d'aspiration de sable via l'entrée de sable (38) dans la tuyère (20) et est éjecté de la tuyère via le canal d'éjection, et
- le sable passant du canal d'éjection dans une conduite de sable (40),
**caractérisé par le fait que**
- de l'air comprimé est prélevé dans une source à air comprimé (12) et est réparti sur ladite tuyère (20) tout en aspirant de sable dans la tuyère et sur une admission d'air débouchant dans la conduite de sable (40),
- ladite tuyère (20) présente - vue dans le sens d'écoulement - une section convergente (24) disposée en aval de ladite ouverture d'aspiration de sable (28),
- l'admission d'air et la tuyère étant reliées à la même source à air comprimé, et
- le rapport entre la quantité d'air comprimé amenée à la tuyère et celle amenée à l'admission d'air étant réglé pour commander la quantité de sable répandue.
